# EUROPÄISCHE PATENTANMELDUNG

(11) **EP 2 660 258 A1**
(43) Veröffentlichungstag der Anmeldung: **06.11.2013**
(21) Anmeldenummer: 12166635.8
(22) Anmeldetag: 03.05.2012
(51) Int. Cl.: C08G 18/02, C08G 18/10, C08G 18/76, C08G 18/79, C08K 5/29, C08L 67/02, C08G 18/75, C08G 18/28, C08G 18/42, C08G 18/66

(54) **Neue Carbodiimid-haltige Zusammensetzungen, ein Verfahren zu deren Herstellung und deren Verwendung**

(71) Anmelder: Rhein Chemie Rheinau GmbH, 68219 Mannheim (DE)
(72) Erfinder: Laufer, Wilhelm, 67158 Ellerstadt (DE); Haas, Uwe, 73249 Wernau (DE)
(74) Vertreter: Siegers, Britta

(57) **Zusammenfassung**

Die Erfindung betrifft neue Carbodiimid-haltige Zusammensetzungen, ein Verfahren zu deren Herstellung und deren Verwendung in Polyurethan-Elastomeren, PU-Klebstoffen, PU-Gießharzen oder PU-Schäumen.

## Beschreibung

Die Erfindung betrifft neue Carbodiimid-haltige Zusammensetzungen, ein Verfahren zu deren Herstellung und deren Verwendung in Polyurethan(PU)-basierten Systemen, vorzugsweise PU-Elastomeren, PU-Klebstoffen, PU-Gießharzen oder PU-Schäumen.

Polyurethane entstehen durch Polyadditions- bzw. Polykondensationsreaktion von Polyisocyanaten mit mehrwertigen Alkoholen, den Polyolen, nahezu quantitativ. Die Verknüpfung erfolgt durch die Reaktion einer Isocyanatgruppe (-N=C=O) eines Moleküls mit einer Hydroxygruppe (-OH) eines anderen Moleküls unter Bildung einer Urethangruppe (-NH-CO-O-).

Der Reaktionsverlauf zwischen Diisocyanat und Polyol ist abhängig von dem Molverhältnis der Komponenten. Zwischenstufen mit gewünschtem Durchschnittsmolekulargewicht und gewünschten Endgruppen können durchaus erhalten werden. Diese Zwischenstufen können dann zu einem späteren Zeitpunkt mit einem Diol oder Diamin umgesetzt (kettenverlängert) werden, wobei dann das gewünschte Polyurethan bzw. Polyurethan-Polyharnstoff Hybrid gebildet wird. Die Zwischenstufen werden im Allgemeinen als Prepolymer bezeichnet.

Geeignete Polyole für die Herstellung von Prepolymeren sind neben den Diolen auch Polyalkylenglykolether, Polyetherester oder Polyester mit endständigen Hydroxylgruppen (Polyesterpolyole).

Für die Herstellung von mechanisch oder dynamisch belastbaren Polyurethanen werden vorzugsweise Polyesterpolyole eingesetzt.

Die durch Polykondensation von einfachen Diolen und Carbonsäuren hergestellten Polyetherester oder Polyester mit endständigen Hydroxylgruppen enthalten noch freie Carbonsäuren. Diese katalysieren die Reaktion zwischen den im Prepolymer enthaltenen freien Isocyanatgruppen und dem für die Kettenverlängerung benötigten Diamin, was zu kurzen Topfzeiten führt und die Reaktion unkontrollierbar macht. Zudem haben diese häufig eine geringe Hydrolysestabilität.

Die zurzeit auf dem Markt erhältlichen Carbodiimide, wie in EP-A 0799843 beschrieben, sind für die Herstellung von PU-Harzen bei tieferen Temperaturen (z. B. in Kaltgiesssystemen) sowie für den schnellen Säureabbau in der für die Herstellung von Prepolymeren vorgegebenen Zeit zu reaktionsträge, oder wegen zu geringer Löslichkeit nicht anwendbar und unwirtschaftlich.

Aufgabe der vorliegenden Erfindung war daher die Bereitstellung von Carbodiimid-haltigen Zusammensetzungen, die sich für die Herstellung von Polyurethan(PU)-basierten Systemen, insbesondere für die Herstellung von PU-Elastomeren, PU-Klebstoffen oder PU-Gießharzen oder PU-Schäumen, eignen, die hydrolysestabil und wirtschaftlich herstellbar sind, die über eine handhabbare Topfzeit verfügen, ohne dass dabei Materialien benötigt werden, die teuer und schwer herzustellen sind.

Überraschenderweise konnte diese Aufgabe durch bestimmte Carbodiimid-haltige Zusammensetzungen gelöst werden.

Gegenstand der vorliegenden Erfindung sind daher Zusammensetzungen enthaltend
mindestens ein Polyol und
mindestens ein Carbodiimid der Formel (I)

R¹-(O)-OC-HN-(R-N=C=N-)ₘ-R-NH-CO-(O)-R¹ (I),

mit m = 1 - 40,
R für C₆-C₁₈-Alkylen oder C₆-C₁₈-Cycloalkylen, vorzugsweise 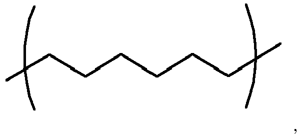 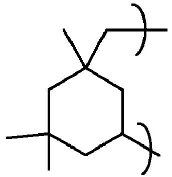 oder 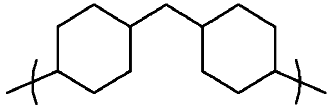 steht,
R¹ für einen Rest -(CH₂)ₕ-O-[(CH₂)ₖ-O]_{g}-R² steht,
mit h = 1-3, k= 1-3, g = 5-20 und R² für H oder C₁-C₄-Alkyl, vorzugsweise CH₃, steht.

In einer weiteren bevorzugten Ausführungsform der Erfindung handelt es sich bei dem Carbodiimid der Formel (I) um eine Verbindung in der
m = 10-30,
R für C₆-C₁₈-Alkylen oder C₆-C₁₈-Cycloalkylen, vorzugsweise 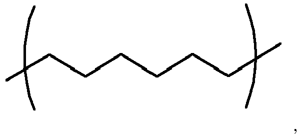 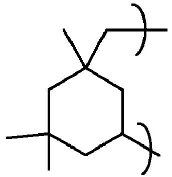 oder 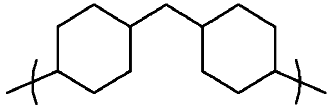 steht,
R¹ für C₁-C₄-Alkyl oder einen Rest -(CH₂)ₕ-O-[(CH₂)ₖ-O]_{g}-R² steht,
mit h = 1-3, k= 1-3, g = 10-12 und R² = H oder C₁-C₄-Alkyl, vorzugsweise CH₃.

In einer weiteren besonders bevorzugten Ausführungsform der Erfindung handelt es sich bei dem Carbodiimid der Formel (I) um eine Verbindung in der
m = 20 ist,
hat R die Bedeutung von C₆-C₁₈-Alkylen oder C₆-C₁₈-Cycloalkylen, vorzugsweise 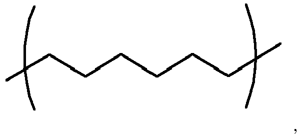 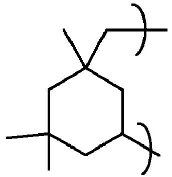 oder 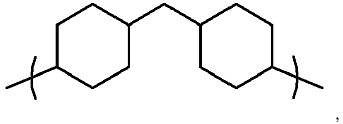 R¹ steht für einen Rest -(CH₂)ₕ-O-[(CH₂)ₖ-O]_{g}-R²,
mit h = 2, k= 2, g = 10-12 und R² steht für CH₃.

Vorzugsweise hat R innerhalb des Carbodiimids der Formel (I) dieselbe Bedeutung.

Bei den Verbindungen der Formel (I) handelt es sich um handelsübliche Stoffe, die z.B. bei der Firma Rhein Chemie Rheinau GmbH z.B. unter dem Handelsnamen Stabaxol®, Hycasyl® erhältlich sind.

Ebenfalls bevorzugt sind Mischungen aus mehreren Carbodiimiden der Formel (I). Im Fall der Mischung können sich bei der Ermittlung des Mittelwertes für m auch gebrochenen Zahlen ergeben.

Bei den Polyolen im Sinne der Erfindung handelt es sich um Verbindungen, die vorzugsweise ein Molekulargewicht in (g/mol) von bis zu 2000, bevorzugt im Bereich von 1000 bis 2000 und besonders bevorzugt im Bereich von 500 bis 1000, aufweisen.

Der Begriff Polyol im Sinne der Erfindung umfasst dabei sowohl Diole als auch Triole, wie auch Verbindungen mit mehr als drei Hydroxylgruppen je Molekül. Die Verwendung von Triolen ist besonders bevorzugt.

Bevorzugte Polyole sind Polyesterpolyole und/oder Polyetheresterpolyole.

Vorteilhaft ist es, wenn das Polyol eine OH-Zahl von bis zu 200, vorzugsweise zwischen 20 und 150 und besonders bevorzugt zwischen 50 und 115, aufweist.

Insbesondere eignen sich Polyesterpolyole, die Reaktionsprodukte von verschiedenen Polyolen mit aromatischen oder aliphatischen Dicarbonsäuren und/oder Polymeren von Lactonen sind.

Bevorzugt hierbei sind aromatische Dicarbonsäuren, welche zur Bildung geeigneter Polyesterpolyole verwendet werden können. Besonders bevorzugt sind hier Terephthalsäure, Isophthalsäure, Phthalsäure, Phtalsäureanhydrid sowie substituierte Dicarbonsäureverbindungen mit Benzolkern.

Als aliphatische Dicarbonsäuren sind solche bevorzugt, welche zur Bildung geeigneter Poylesterpolyole verwendet werden können, besonders bevorzugt Sebacinsäure, Adipinsäure und Glutarsäure.

Als Polymere von Lactonen sind solche bevorzugt, welche zur Bildung geeigneter Poylesterpolyole verwendet werden können, besonders bevorzugt Polycaprolacton.

Sowohl bei den Dicarbonsäuren als auch bei den Polymeren von Lactonen handelt es sich um handelsübliche Substanzen.

Besonders bevorzugt sind auch solche Polyole, welche zur Bildung geeigneter Polyesterpolyole verwendet werden können, ganz besonders bevorzugt Ethylenglykol, Butandiol, Neopentylglykol, Hexandiol, Propylenglykol, Dipropylenglykol, Diethylenglykol und Cyclohexandimethanol.

In einer weiteren bevorzugten Ausführungsform der Erfindung handelt es sich bei den Polyolen um Polyetheresterpolyole.

Hierfür sind die Reaktionsprodukte von verschiedenen vorhergehend genannten Polyolen mit aromatischen oder aliphatischen Dicarbonsäuren und/oder Polymeren von Lactonen (z.B. Polycaprolacton) bevorzugt.

Bei den im Sinne der Erfindungen eingesetzten Polyolen handelt es sich um handelsübliche Verbindungen, die bei der Firma Bayer MaterialScience AG unter dem Handelsnamen Baycoll® oder Desmophen^{®} erhältlich sind.

In einer weiteren Ausführungsform der Erfindung enthält die Zusammensetzung zusätzlich mindestens ein Diisocyanat.

Als Diisocyanate sind aromatische und aliphatische Diisocyanate bevorzugt. Besonders bevorzugt sind Toluol-2,4-diisocyanat, Toluol-2,6-diisocyanat, Phenylendiisocyanat, 4,4-Diphenylmethandiisocyanat, Methylen-bis(4-phenylisocynat), Naphttalen-1,5-diisocyanat, Tetramethylen-1,4.diisocyanat und/oder Hexamethylen-1,6-diisocyanat, ganz besonders bevorzugt Toluol-2,4-diisocyanat und Toluol-2,6-diisocyanat.

In einer weiteren Ausführungsform der Erfindung enthält die Zusammensetzung zusätzlich mindestens ein Diamin und/oder Diol.

Als Diole sind Butandiol, Neopentylglykol, Hexandiol, Propylenglykol, Dipropylenglykol, Diethylenglykol und/oder Cyclohexandimethanol bevorzugt.

Als Diamine, welche für die Kettenverlängerung eingesetzt werden, sind 2-Methylpropyl-3,5-diamino-4-chlorobenzoat, Bis-(4,4'-amino-3-chlorophenyl)-methan, 3,5-Dimethylthio-2,4-toluylendiamin, 3,5-Dimethylthio-2,4-toluylendiamin, 3,5-Diethyl-2,4-toluylendiamin, 3,5-Diethyl-2,6-toluylendiamin, 4,4'-Methylen-bis-(3-chloro-2,6-diethylanilin) und 1,3-Propandiol-bis(4-aminobenzoat) bevorzugt.

Bei den im Sinne der Erfindung zur Kettenverlängerung eingesetzten Diaminen oder Diolen handelt es sich um handelsübliche Verbindungen, die bei der Firma Rheinchemie Rheinau GmbH unter dem Handelsnamen Addolink® erhältlich sind.

Als Katalysatoren werden vorzugsweise Dibutylzinndilaurate oder Triethylendiamin in Dipropylenglycol eingesetzt.

Bei den im Sinne der Erfindungen eingesetzten Katalysatoren handelt es sich um handelsübliche Verbindungen, die bei der Fa. Rheinchemie Rheinau GmbH unter dem Handelsnamen Addocat® erhältlich sind.

Als Diole für die Kettenverlängerung sind Butandiol 1.4 oder auch Hexandiol 1,6 bevorzugt.

Bei den im Sinne der Erfindungen eingesetzten Diolen handelt es sich um handelsübliche Verbindungen, die bei der Firma Rheinchemie Rheinau GmbH unter dem Handelsnamen Addolink® erhältlich sind.

Das Verhältnis von Polyol zu Carbodiimid beträgt vorzugsweise 0,1- 5, besonders bevorzugt 1-3 Gew. Teile auf 100 Gew.-Teile Polyol.

Das Verhältnis von Diisocyanat zu Polyol beträgt vorzugsweise 20 bis 50 zu 100 Gew.-Teile, besonders bevorzugt 30 zu 100 Gew.-Teile.

In den Fällen, in denen die Zusammensetzung neben dem Polyol und dem Carbodiimid sowie dem Diisocyanat zusätzlich mindestens ein Diamin und/oder oder Diol enthält, beträgt die Menge an Diamin und/oder Diol 5-30 Gew.%, bezogen auf die Zusammensetzung.

In den Fällen, in denen die Zusammensetzung neben dem Polyol und dem Carbodiimid sowie dem Diisocyanat zusätzlich mindestens einen Katalysator enthält, beträgt die Menge an Katalysator 0,01-1 Gew.%, bezogen auf die Zusammensetzung.

Gegenstand der vorliegenden Erfindung ist zudem die Herstellung der erfindungsgemäßen Zusammensetzung, wonach das Polyol vorgelegt und das Carbodiimid nach Formel (I) oder eine Mischung aus Carbodiimide nach Formel (I) eingerührt wird.

In den Fällen, in denen die erfindungsgemäße Mischung zusätzlich noch das Diisocyanat enthält wird dieses in die Zusammensetzung aus Polyol und mindestens einem Carbodiimid nach Formel (I) bei Temperaturen zwischen 80 und 130°C eingerührt.

In den Fällen, in denen die erfindungsgemäße Mischung neben dem Diisocyanat zusätzlich noch ein Amin und/oder Diol enthält wird dieses in die Zusammensetzung aus Polyol und mindestens einem Carbodiimid nach Formel (I) und Diisocyanat bei Temperaturen im Bereich von 40 bis 100°C eingerührt.

In den Fällen, in denen die erfindungsgemäße Mischung neben dem Diisocyanat und dem Amin und/oder Diol zusätzlich noch mindestens einen Katalysator enthält wird dieser zunächst mit dem Diol vorgemischt und in die Zusammensetzung aus Polyol und mindestens einem Carbodiimid nach Formel (I) und Diisocyanat bei Temperaturen im Bereich von 40 bis 100°C eingerührt.

Alternativ dazu kann die Herstellung der erfindungsgemäßen Zusammensetzungen auch nach dem sog. one-shot-Verfahren hergestellt werden. Dieses Verfahren, z.B. beschrieben in G. Oertels Kunststoff Handbuch 7, auf Seite 26, ist mit den erfindungsgemäßen Carbodiimiden analog anwendbar.

Gegenstand der vorliegenden Erfindung ist zudem die Verwendung der erfindungsgemäßen Zusammensetzungen in PU-Elastomeren, Klebstoffen oder Gießharzen als Schutz gegen hydrolytischen Abbau.

Der Rahmen der Erfindung erfasst alle oben stehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Die nachfolgenden Beispiele dienen der Erläuterung der Erfindung, ohne dabei limitierend zu wirken.

### Ausführungsbeispiele

In den nachfolgenden Beispielen wurden die folgenden Substanzen eingesetzt:
Ein lineares Polyesterpolyol mit einer OH-Zahl von 56 mg KOH/g und einer Säurezahl von 0,83 mg KOH/g, der Firma Bayer MaterialScience AG mit dem Handelsnamen Desmophen® 2000MZ
Ein verzweigtes Polyesterpolyol mit einer OH-Zahl von 110 mg KOH/g und einer Säurezahl von 0,80 mg KOH/g, der Firma Bayer MaterialScience AG mit dem Handelsnamen Baycoll® AV 2113
Ein Carbodiimid der Formel (I) mit einem durchschnittlichen m von 20, R¹ = -(CH₂)ₕ-O-[(CH₂)ₖ-O]_{g}-R² wobei R²=Methyl, h = 2, k= 2 und g = 10-12 ist.

Stabaxol^{®} P200, ein polymeres aromatisches Carbodiimid auf Basis von Tetramethylxyloldiisocyanat der Firma Rhein Chemie Rheinau GmbH.

Stabaxol^{®} I, ein monomeres Carbodiimid auf Basis von 2,6-Diisproylphenylenisocyanat der Firma Rhein Chemie Rheinau GmbH.

Desmodur^{®} T100, ein 2,4-Toluylendiisocyanat der Firma Bayer Material Science.

Desmodur^{®} PU 0129, ein 2,4/4,4 Diphenylmethandiisocyanat Isomerengemisch .

Addolink^{®} 1604, ein 2-Methylpropyl-3,5-diamino-4-chlorobenzoat der Firma Rheinchemie Rheinau GmbH als Diaminkomponente.

Addolink^{®} B, ein 1,4-Butandiol der Firma Rheinchemie Rheinau GmbH als Diolkomponente.

Addocat^{®} 201, ein Dibutylzinndilaurat der Firma Rheinchemie Rheinau GmbH, als Katalysator.

Carbodilite^{®} HMV-8 CA: ein polymeres aliphatisches Carbodiimid der Firma Nisshinbo Industries, INC.

Des Weiteren enthält ein Teil der Formulierung ein Molekularsieb zur Feuchtigkeitsadsorption.

Es wurden die folgenden Mischungen wie folgt hergestellt.

Mischung A (Vergleich): 100g des linearen Polyesterpolyols mit einer OH-Zahl von 56 mg KOH/g wurde bei 100°C aufgeschmolzen.

Mischung B (erfindungsgemäß): 100g des linearen Polyesterpolyols mit einer OH-Zahl von 56 mg KOH/g wurde bei 100°C aufgeschmolzen und mit 0,6 g des Carbodiimids der Formel (I) mit einem durchschnittlichen m von 20, R¹ = -(CH₂)ₗ-O-[(CH₂)ₖ-O]_{g}-R² wobei R²=Methyl, 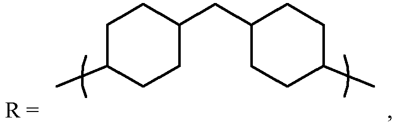 h = 2, k= 2 und g = 10-12 ist versetzt.

Mischung C (Vergleich): 100 g des linearen Polyesterpolyols mit einer OH-Zahl von 56 mg KOH/g wurde bei 100°C aufgeschmolzen und mit 0,6g monomerem Carbodiimid auf Basis von 2,6-Diisproylphenylenisocyanat versetzt.

Mischung D (Vergleich): 100g des bei Raumtemperatur flüssigen, verzweigten Polyesterpolyols mit einer OH-Zahl von 110 mg KOH/g

Mischung E (erfindungsgemäß): 100g des bei Raumtemperatur flüssigen, verzweigten Polyesterpolyols mit einer OH-Zahl von 110 mgKOH/g wurde mit 0,6g des Carbodiimids der Formel (I) mit einem durchschnittlichen m von 20, R¹ = -(CH₂)ₗ-O-[(CH_{z})ₖ-O]_{g}-R²wobei 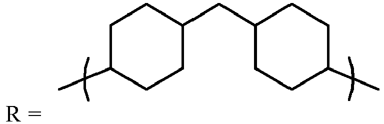 R²=Methyl, h = 2, k= 2 und g = 10-12 ist ,versetzt und 24h bei 30°C gelagert.

Mischung F (Vergleich): 100g des bei Raumtemperatur flüssigen, verzweigten Polyesterpolyols mit einer OH-Zahl von 110 mg KOH/g wurde mit 0,6 g monomerem Carbodiimid auf Basis von 2,6-Diisproylphenylenisocyanat versetzt und 24h bei 30°C gelagert.

Mischung G (Vergleich): 100g des bei Raumtemperatur flüssigen, verzweigten Polyesterpolyols mit einer OH-Zahl von 110 mg KOH/g wurde mit 0,6g polymerem Carbodiimid auf Basis von 2,6-Tetramethylxyloldiisocyanat versetzt und 24h bei 30°C gelagert.

Mischung H (Vergleich): 100g des, bei Raumtemperatur flüssigen, verzweigten Polyesterpolyols mit einer OH-Zahl von 110 mg KOH/g wurde mit 0,6g Carbodilite versetzt und 24h bei 30°C gelagert. Beide Substanzen lassen sich nicht vermischen. Damit war diese Mischung für weitere Versuche nicht einsetzbar.

Von den Mischungen D bis G wurde nach der Lagerung die Säurezahl in Anlehnung an die DIN 53402 gemessen. Die Ergebnisse sind in Tabelle 1 dargestellt:

**Tabelle 1:**

| | Säurezahl mg KOH/g |
|---|---|
| Mischung D (Vergleich) | 0,83 |
| Mischung E (erfindungsgemäß) | 0,18 |
| Mischung F (Vergleich) | 0,76 |
| Mischung G (Vergleich) | 0,60 |

Die jeweilige Zusammensetzung der hergestellten Elastomere ergibt sich aus den Tabellen 2 und 4.

Alle Angaben sind in Gew.-Teilen, sofern nicht anders ausgewiesen.

**Tabelle 2:**

| **Anteile/ Mischungs-Nr.** | **Mischung A** | **Mischung B** | **Mischung C** | **Desmodur® T100** | **Addolink 1604** |
|---|---|---|---|---|---|
| I (V) | 100 | | | 21 | 16,16 |
| II (erf) | | 100 | | 21 | 16,16 |
| III (V) | | | 100 | 21 | 16,16 |

| | | | | | |
|---|---|---|---|---|---|
| V = Vergleichsbeispiel, erf = erfindungsgemäß | | | | | |

Mischungen A bis C wurden bei Temperaturen von 80°C mit den in der Tabelle 2 angegebenen Mengen an Desmodur® T 100, bis zu einem Isocyanatgehalt von 5% umgesetzt und anschließend mit dem Kettenverlängerer Addolink® 1604 in der mit der in der Tabelle 2 angebenen Menge zur Reaktion gebracht. Von dem noch flüssigen, nach wenigen Minuten gelierenden, zu einem festen Elastomer reagierenden Gemisch wurde die Topfzeit bestimmt. Die Topfzeit ist die Zeit zwischen dem Anmischen einer mehrkomponentigen Substanz und dem Ende der Verarbeitbarkeit. Die ermittelten Werte sind in Tabelle 3 dargestellt.

**Tabelle 3:**

| **Mischung** | **Topfzeit in Sekunden** |
|---|---|
| I | 240 |
| II | 420 |
| III | 340 |

**Tabelle 4:**

| | Mischung D (V) | Mischung E (erf) | Mischung F (V) | Mischung G (V) | Addocat® 201 | Addolink® B | Desmodur® PU 0129 |
|---|---|---|---|---|---|---|---|
| IV (V) | 100 | | | | 0,06 | 10 | 56 |
| V (erf) | | 100 | | | 0,06 | 10 | 56 |
| VI (V) | | | 100 | | 0,06 | 10 | 56 |
| VII (V) | | | | 100 | 0,06 | 10 | 56 |

| | | | | | | | |
|---|---|---|---|---|---|---|---|
| Alle Mischungen enthielten zudem 5 Gew-Teile Molsieb zur Feuchtigkeitsabsorption | | | | | | | |

Die Mischungen D bis G wurden nach der one-shot Methode verarbeitet, d.h. mit Molsieb, Addocat® und Addolink® B vorgemischt und mit dem Diisocyanat (Desmodur® PU 0129) zur Reaktion gebracht. Das noch flüssige, nach wenigen Minuten, zu einem festen Elastomer reagierenden Gemisch wurde in eine 30°C warme Prüfform gegossen, nach 1h entformt und 16h bei 100°C konditioniert.

Aus den so hergestellten Prüfplatten der Mischungen IV bis VII wurden nach 7 Tagen Lagerung bei 22°C Norm-Prüfkörper ausgestanzt.

Die Hydrolysestabilität Mischungen IV bis VII wurde wie folgt bestimmt:
Die ausgestanzten Norm-Prüfkörper wurden unter Wasser bei einer Temperatur von 80°C 4 Tage gelagert. Die Zugfestigkeit der in Wasser gelagerten Prüfkörper wurde nach jeweils 24h gemessen.

Tabelle 5 zeigt die prozentuale Abnahme der Zugfestigkeit als Rest der ursprünglichen Zugfestigkeit von 100%

**Tabelle 5:**

| | Tag 0 | Tag 1 | Tag 2 | Tag 3 | Tag 4 |
|---|---|---|---|---|---|
| IV (V) | 100 | 80 | 70 | 60 | 50 |
| V (erf) | 100 | 95 | 90 | 85 | 83 |
| VI(V) | 100 | 90 | 80 | 70 | 60 |
| VII (V) | 100 | 90 | 85 | 75 | 65 |

### Interpretation der Versuchsergebnisse:

Es ist bekannt, dass organischen Carbonsäuren welche in Polyestern enthalten sind und aus denen Prepolymere hergestellt werden, die Reaktion zwischen Diisocyanat und Diamin katalysieren. Hohe Säurezahlen führen hier zu kürzeren Topfzeiten was zu einem Verarbeitungsproblem führen kann, was in den Beispielen I bis III klar ersichtlich ist.

Weiterhin ist bekannt das Carbodiimide mit Carbonsäuren reagieren und somit als Hydrolyseschutzmittel eingesetzt werden. Die auf dem Markt erhältlichen polymeren und monomeren aromatischen Carbodiimide reagieren bei höheren Temperaturen gut, jedoch läuft die Reaktion bei niedrigen Temperaturen sehr viel langsamer ab, was auch durch die Vergleichsbeispiele IV, V und VII belegt wird.

Es ist klar ersichtlich, dass die Mischung mit dem erfindungsgemäßen Carbodiimid der Formel (I) mit einem durchschnittlichen m von 20, R¹ = -(CH₂)ₗ-O-[(CH₂)ₖ-O]_{g}-R² wobei R²=Methyl, 1 = 2, k= 2 und g = 10-12 ist, schneller mit organischen Carbonsäuren reagiert und dies auch bei niedrigeren Temperaturen. In diesem Fall bei 30°C.

Des Weiteren konnte gezeigt werden, dass durch die schnellere Reaktion des erfindungsgemäßen Carbodiimids der Formel (I) mit einem durchschnittlichen m von 20, R¹ = -(CH₂)ₕ-O-[(CH₂)ₖ-O]_{g}-R² wobei R²=Methyl, h = 2, k= 2 und g = 10-12 mit organischer Carbonsäure, der hydrolytische Abbau des Polymers verzögert werden kann.

Damit zeigen die erfindungsgemäßen Mischungen gegenüber denen des Standes der Technik ein überlegenes Eigenschaftsprofil und eine gute Verarbeitbarkeit und Lagerstabilität.

## Patentansprüche

1. Zusammensetzung enthaltend
- mindestens ein Polyol und
- mindestens ein Carbodiimid der Formel (I)
R¹-(O)-OC-HN-(R-N=C=N-)ₘ-R-NH-CO-(O)-R¹ (I),
mit m = 1 - 40,
wobei R für C₆ - C₁₈-Alkylen oder C₆ - C₁₈-Cycloalkylen,
und R¹ für -(CH₂)ₕ-O-[(CH₂)ₖ-O]_{g}-R² steht, wobei
h = 1-3, k= 1-3, g = 5-20 und wobei R² für H oder C₁-C₄-Alkyl steht.

2. Zusammensetzung nach Anspruch 1, **dadurch gekennzeichnet, dass** in dem Carbodiimid der Formel (I) m = 10-30 ist,
R für C₆-C₁₈-Alkylen oder C₆-C₁₈-Cycloalkylen steht,
R¹ für C₁-C₄-Alkyl oder einen Rest -(CH₂)ₕ-O-[(CH₂)ₖ-O]_{g}-R² steht,
mit h = 1-3, k= 1-3, g = 10-12 und wobei R² für H oder C₁-C₄-Alkyl steht

3. Zusammensetzung nach einem oder mehreren der Ansprüche 1 bis 2, **dadurch gekennzeichnet, dass** es sich bei den Carbodiimiden um Mischungen aus mehreren Carbodiimiden der Formel (I) handelt.

4. Zusammensetzung nach einem oder mehreren der Ansprüche 1 bis 3, **dadurch gekennzeichnet, dass** es R in den Carbodiimiden der Formel (I) die Bedeutung von 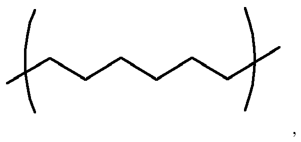 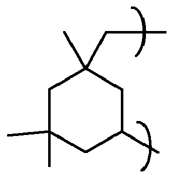 oder 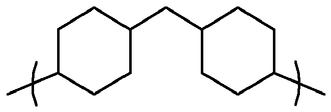 hat,
R¹ für einen Rest -(CH₂)ₕ-O-[(CH₂)ₖ-O]_{g}-R² steht,
mit h = 1-3, vorzugsweise 2, k= 1-3, vorzugsweise 2 und g = 5-20, vorzugsweise 10 - 12 und R² für H oder C₁-C₄-Alkyl, vorzugsweise CH₃, steht

5. Zusammensetzung nach einem oder mehreren der Ansprüche 1 bis 4, **dadurch gekennzeichnet, dass** es sich bei dem Polyol um Polyesterpolyole und/oder Polyetherester polyole handelt.

6. Zusammensetzung nach einem oder mehreren der Ansprüche 1 bis 5, **dadurch gekennzeichnet, dass** diese zusätzlich mindestens ein Diisocyanat enthält.

7. Zusammensetzung nach einem oder mehreren der Ansprüche 1 bis 6, **dadurch gekennzeichnet, dass** diese mindestens einen Katalysator enthält.

8. Zusammensetzung nach einem oder mehreren der Ansprüche 1 bis 7, **dadurch gekennzeichnet, dass** diese zusätzlich mindestens ein Diamin und/oder ein Diol einhält.

9. Verfahren zur Herstellung einer Zusammensetzung nach einem oder mehreren der Ansprüche 1 bis 5, **dadurch gekennzeichnet, dass** das Polyol vorgelegt und das Carbodiimid nach Formel (I) oder eine Mischung aus Carbodiimiden nach Formel (I) eingerührt wird.

10. Verfahren zur Herstellung einer Zusammensetzung nach Anspruch 6, **dadurch gekennzeichnet, dass** in die Zusammensetzung aus Polyol und mindestens einem Carbodiimid nach Formel (I) und Diisocyanat bei Temperaturen im Bereich von 80 bis 130°C eingerührt wird.

11. Verfahren zur Herstellung einer Zusammensetzung nach Anspruch 8, **dadurch gekennzeichnet, dass** der Katalysator zunächst mit dem Diol vorgemischt und in die Zusammensetzung aus Polyol und mindestens einem Carbodiimid nach Formel (I) und dem Diisocyanat bei Temperaturen im Bereich von 40 bis 100°C eingerührt wird.

12. Verwendung der Zusammensetzung nach einem oder mehreren der Ansprüche 1 bis 8 in Polyurethan-Elastomeren, Klebstoffen oder Gießharzen als Schutz gegen hydrolytischen Abbau.
